# EUROPÄISCHE PATENTSCHRIFT

(11) **EP 1 480 766 B1**
(45) Veröffentlichungstag und Bekanntmachung des Hinweises auf die Patenterteilung: **11.10.2006**
(21) Anmeldenummer: 03704370.0
(22) Anmeldetag: 10.01.2003
(51) Int. Cl.: B21B 39/00

(54) **VEREINZELUNGSVORRICHTUNG**
SEPARATION DEVICE
DISPOSITIF DE SEPARATION

(30) Priorität: 28.02.2002 DE 10208929
(43) Veröffentlichungstag der Anmeldung: 01.12.2004
(73) Patentinhaber: BL Chemie GmbH & Co. KG, 58809 Neuenrade (DE)
(72) Erfinder: Bültmann, Rudolf, 58809 Neuenrade (DE)
(74) Vertreter: Graefe, Jörg
(86) Internationale Anmeldenummer: PCT/EP2003/000170
(87) Internationale Veröffentlichungsnummer: WO 2003/072276

(56) Entgegenhaltungen:
- GB-A- 1 094 978
- US-A- 3 151 747
- US-A- 3 195 737
- US-A- 3 244 365
- US-A- 4 075 086
- US-A- 4 467 909
- US-A- 4 660 712

## Beschreibung

Die vorliegende Erfindung betrifft eine Vereinzelungsvorrichtung für stangenförmiges Gut.

Eine gattungsgemäße Vereinzelungsvorrichtung ist bereits aus der US 3 151 747 und aus der US-A-4 660 712 bekannt. Hier wird eine Vereinzelungsvorrichtung, umfassend eine Vereinzelungsscheibe und eine Förderstrecke vorgeschlagen, mit umfangsseitig angeordneter Aufnahmemulde, sowie im wesentlichen entlang der Drehachse der Vereinzelungsscheibe angeordnete Transportmittel mit Mitnehmern, wobei das zu vereinzelnde Material der Vereinzelungsscheibe zugeführt werden kann.

Als problematisch bei der hier vorgeschlagenen Vorrichtung erweist sich jedoch die relativ aufwendige und komplizierte Mechanik des Klauenmechanismus, welche die gesamte Vereinzelungsvorrichtung zum einen teuer und zum anderen anfällig gegenüber Betriebsstörungen macht. Auch ist die Vereinzelungsvorrichtung durch die anspruchsvolle Klauenmechanik auf einen Stabquerschnitt festgelegt und nur recht arbeitsaufwendig auf neue Querschnitte anzupassen. Nicht zuletzt ist der Durchsatz einer derartigen Vereinzelungsvorrichtung relativ begrenzt, da das stabförmige Gut zunächst über die Klaue gegriffen, arretiert und anschließend über die Förderstrecke und die Vereinzelungsscheibe auf eine gegenüberliegende Rutsche transportiert werden muß.

Hier setzt die vorliegende Erfindung an und stellt sich die Aufgabe eine Vereinzelungsvorrichtung bereitzustellen, die ohne eine wartungsintensive Klauenmechanik auskommt und einen höheren Durchsatz aufweist.

Erfindungsgemäß wird dieses Problem durch eine Vereinzelungsvorrichtung mit den kennzeichnenden Merkmalen des Anspruchs 1 gelöst. Durch die Verwendung mindestens zweier über den Umfang der Vereinzelungsscheibe vorgesehenen Aufnahmemulden, wird eine Vereinzelungsvorrichtung bereitgestellt, die einen höheren Durchsatz leisten kann, da bei einer Umdrehung bereits mindestens zwei Einheiten stabförmiges Gut transportiert bzw. vereinzelt werden können. Entsprechend höherer Durchsatz wird durch entsprechend viele Aufnahmemulden gewährleistet. Hierdurch werden mitunter hohe Drehgeschwindigkeiten der Vereinzelungsscheibe vermieden, so daß aufwendige mechanische Sicherungen des stabförmigen Materials während des Vereinzelns bzw. Transportierens nicht benötigt werden.

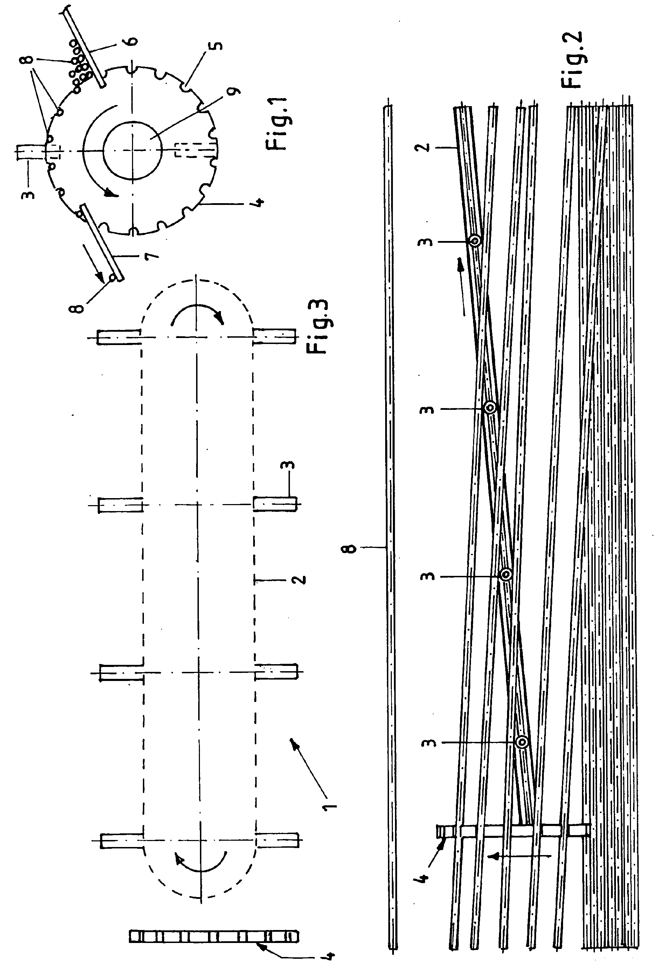

Darüber hinaus ist es von Vorteil, wenn die Transportmittel, deren Mitnehmer das stabförmige Material nach der Aufnahme durch die Vereinzelungsscheibe hintergreifen und in Richtung der Rutsche transportieren, schräg in Bezug auf die Drehachse der Vereinzelungsscheibe ausgerichtet sind. Durch Auswahl des geeigneten Anstellwinkels transportiert der Mitnehmer das stangenförmige Material derart, daß nach der entsprechenden Drehung der Vereinzelungsscheibe, das stangenförmige Material wieder parallel zu der aufnehmenden Rutsche ausgerichtet ist (vgl. Fig. 2).

Zur geeigneten Synchronisation von Transportmittel und Vereinzelungsscheibe ist es von Vorteil, entsprechende Mittel, wie beispielsweise einen Steuercomputer einzusetzen, der gleichermaßen den Anstellwinkel in Abhängigkeit von der Materiallänge, sowie die zu erreichende Taktgeschwindigkeit berechnen und steuern kann.

Vorteilhafterweise sind die Aufnahmemulden der Vereinzelungsscheibe derart verstellbar, dass sie an den Querschnitt des stangenförmigen Materials angepasst werden können. Dadurch muss die Vereinzelungsscheibe nicht gewechselt werden, wenn nacheinander Stangen oder Rohre unterschiedlichen Querschnitts vereinzelt werden müssen.

Als weitere vorteilhafte Weiterbildung der vorliegenden Erfindung bietet es sich an, die Aufnahmemulden mit Einsätzen auszustatten, die entsprechend dem Einsatzzweck über einen geeigneten Schnellbefestigungsmechanismus ausgetauscht werden können.

Dementsprechend kann es von Vorteil sein, Einsätze vorzusehen, die von der eigentlichen Form der Aufnahmemulden abweichen, wie beispielsweise Einsätze welche die Aufnahmemulde verkleinern oder aber eine evolventenartige Form bereitstellen.

Dementsprechend kann es ebenfalls von Vorteil sein, einen Kunststoffeinsatz zu wählen, wenn beispielsweise oberflächenbeschichtete Rohre vereinzelt werden sollen. Dementsprechend hängt der gewählte Einsatz von dem zu vereinzelnden Material ab.

Eine weitere vorteilhafte Ausgestaltung der vorliegenden Erfindung sieht vor, dass die Vereinzelungsscheibe Klemmmittel aufweist, mittels der das stangenförmige Material in den Aufnahmemulden festgelegt werden kann. Durch diese Maßnahme kann das stabförmige Material bei Bedarf eingeklemmt werden, beispielsweise wenn überaus hohe Drehgeschwindigkeiten gefahren werden sollen.

Es besteht erfindungsgemäß die Möglichkeit, daß die Transportmittel als Kette oder Seil ausgeführt sind.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Prinzipdarstellung einer erfindungsgemäßen Vereinzelungsvorrichtung in einer Schnittansicht von vorne;
- Fig. 2: eine Prinzipdarstellung einer erfindungsgemäßen Vereinzelungsvorrichtung in einer Ansicht von oben;
- Fig. 3: eine Prinzipdarstellung einer erfindungsgemäßen Vereinzelungsvorrichtung in einer seitlichen Schnittansicht;

Zunächst wird auf Fig. 1 Bezug genommen.

Eine erfindungsgemäße Vereinzelungsvorrichtung 1 umfaßt im wesentlichen eine Vereinzelungsscheibe 4, eine Rampe 6, die mit stangenförmigem Material 8 beschickt werden kann, eine der Rampe 6 gegenüberliegende, zur Aufnahme des vereinzelten stangenförmigen Materials 8 geeignete Rutsche 7, sowie ein zwischen Rampe 6 und Rutsche 7 angeordnete, beispielsweise als Kette ausgebildete Transportmittel 2.

Das stangenförmige Material 8 wird auf einer Rampe 6 mit geeigneter Schräge vorgehalten, so daß die Endbereiche des stangenförmigen Materials in Aufnahmemulden 5 der sich drehenden Vereinzelungsscheibe 4 aufgenommen werden können.
Entlang der Drehachse der Vereinzelungsscheibe 4 sind die Transportmittel 2 in einem angestellten Winkel angeordnet, wobei die Transportmittel 2 mit Mitnehmern 3 ausgestattet sind, die sich auf der dem stangenförmigen Material 8 zugewandten Seite von der Vereinzelungsscheibe 4 wegbewegen.

Nach Aufnahme des stangenförmigen Materials 8 in den vorgesehenen Aufnahmemulden 5 der Vereinzelungsscheibe 4 werden die vereinzelten Endbereiche des stangenförmigen Materials 8 jeweils von einem Mitnehmer 3 hintergriffen, wobei durch die Schräge der Transportmittel 2 und entsprechende Synchronisation der Transportmittelgeschwindigkeit der Mitnehmer 3 das vereinzelte stangenförmige Material in eine im wesentlichen parallele Position zu der Rutsche 7 bewegt, so daß das nun vereinzelte stangenförmige Material entsprechend dem gewünschten Takt auf der Rutsche 7 abgeladen werden kann.

Erfindungsgemäß ist es vorgesehen, eine Vielzahl von Aufnahmemulden 5 umfangsseitig der Vereinzelungsscheibe 4 bereitzustellen. Durch Bereitstellung entsprechend vieler Aufnahmemulden 5 kann die Umfangsgeschwindigkeit der Vereinzelungsscheibe 4 bei gleichbleibender Taktrate des vereinzelten stangenförmigen Materials 8 herabgesetzt werden, wodurch Verschleiß und Wartung vermindert werden. Die vergleichsweise geringe Drehgeschwindigkeit der Vereinzelungsscheibe 4 hat ebenfalls einen positiven Effekt auf eine sichere Aufnahme des stangenförmigen Materials 8, da Effekte, die beispielsweise durch Fliehkräfte oder Massenträgheiten entstehen, vermieden werden.

Weiterhin ist vorgesehen, die Aufnahmemulden 5 mit entsprechenden Einsätzen 10 auszustatten, die beispielsweise die Abmaße der Aufnahmemulde 5 vermindern oder dieser eine andere Geometrie verleihen. Denkbar sind auch Einsätze 10 aus Kunststoff, die beispielsweise eine schadlose Vereinzelung von oberflächenbeschichteten stangenförmigem Material 8 gewährleisten. Auch sind beispielsweise magnetische Einsätze 10 zur besseren Fixierung des stangenförmigen Materials denkbar.

## Patentansprüche

1. Vereinzelungsvorrichtung (1) für stangenförmiges Material umfassend mindestens eine Vereinzelungsscheibe (4) mit umfangsseitig angeordneter Aufnahmemulde (5), sowie im wesentlichen entlang der Drehachse der Vereinzelungsscheibe (4) angeordnete Transportmittel (2) mit Mitnehmern (3), wobei das zu vereinzelnde stangenförmige Material der Vereinzelungsscheibe (4) zugeführt werden kann und mindestens zwei Aufnahmemulden (5) vorgesehen sind,
**dadurch gekennzeichnet, daß** die Mitnehmer (3) auf der dem Stangenförmigen Material (8) zugewandten Seite von der Vereinzelungsscheibe (4) wagbewegbar sind.

2. Vereinzelungsvorrichtung nach Anspruch 1, **dadurch gekennzeichnet, dass** die Transportmittel (2) im wesentlichen schräg zu der Drehachse der Vereinzelungsscheibe (4) ausgerichtet sind, wobei ein Anstellwinkel zwischen der Drehachse und den Transportmitteln (2) so gewählt ist, dass nach einer Drehung der Vereinzelungsscheibe (4) das zu vereinzelnde Material (8) parallel zur Drehachse ausgerichtet ist.

3. Vereinzelungsvorrichtung nach Anspruch 1 oder 2, **dadurch gekennzeichnet, daß** Mittel zur Synchronisation der Drehgeschwindigkeit der Vereinzelungsscheibe (4) mit der Transportmittel (2) vorgesehen sind.

4. Vereinzelungsvorrichtung nach einem der Ansprüche 1 bis 3, **dadurch gekennzeichnet, daß** die Aufnahmemulden (5) der Vereinzelungsscheibe (4) derart verstellbar sind, dass sie an den Querschnitt des stangenförmigen Materials angepasst werden können.

5. Vereinzelungsvorrichtung nach einem der Ansprüche 1 bis 4, **dadurch gekennzeichnet, daß** die Aufnahmemulden (5) der Vereinzelungsscheibe (4) mit Einsätzen (10) ausgestattet werden können.

6. Vereinzelungsvorrichtung nach Anspruch 5, **dadurch gekennzeichnet, daß** es sich bei dem Einsatz um eine von der Aufnahmemuldenform abweichende geometrische Form handelt.

7. Vereinzelungsvorrichtung nach einem der Ansprüche 5 oder 6, **dadurch gekennzeichnet, daß** es sich bei dem Material des Einsatzes um einen Kunststoff handelt.

8. Vereinzelungsvorrichtung nach einem der Ansprüche 1 bis 7, **dadurch gekennzeichnet, daß** die Vereinzelungsscheibe (4) Klemmmittel aufweist, mittels der das stangenförmige Material in den Aufnahmemulden festgelegt werden kann.

9. Vereinzelungsvorrichtung nach einem der Ansprüche 1 bis 8, **dadurch gekennzeichnet, daß** das zu vereinzelnde stangenförmige Material über eine Rampe (6) der Vereinzelungsscheibe (4) zugeführt und das vereinzelte stangenförmige Material auf einer Rutsche (7) bereitgestellt werden kann.

10. Vereinzelungsvorrichtung nach einem der Ansprüche 1 bis 9, **dadurch gekennzeichnet, daß** die Transportmittel (2) als Kette oder Seil ausgeführt sind.

## Claims

1. Separation device (1) for rod-shaped material comprising at least one separator disc (4) with a circumferentially arranged receiving trough (5), and conveying means (2) with drivers (3) arranged substantially along the axis of rotation of the separator disc (4), wherein the rod-shaped material to be separated can be fed to the separator disc (4) and at least two receiving troughs (5) are provided, **characterized in that** the drivers (3) can be moved away from the separator disc (4) on the side facing the rod-shaped material (8).

2. Separation device according to Claim 1, **characterized in that** the conveying means (2) are oriented substantially obliquely to the axis of rotation of the separator disc (4), wherein a setting angle between the axis of rotation and the conveying means (2) is selected such that, after one rotation of the separator disc (4), the material (8) to be separated is oriented parallel to the axis of rotation.

3. Separation device according to Claim 1 or Claim 2, **characterized in that** means are provided for synchronizing the speed of rotation of the separator disc (4) with the conveying means (2).

4. Separation device according to one of Claims 1 to 3, **characterized in that** the receiving troughs (5) of the separator disc (4) are adjustable in such a manner that they can be adapted to the cross section of the rod-shaped material.

5. Separation device according to one of Claims 1 to 4, **characterized in that** the receiving troughs (5) of the separator disc (4) can be equipped with inserts (10).

6. Separation device according to Claim 5, **characterized in that** the insert exhibits a geometric shape which differs from the shape of the receiving trough.

7. Separation device according to either of Claims 5 and 6, **characterized in that** the material of the insert is a plastics material.

8. Separation device according to one of Claims 1 to 7, **characterized in that** the separator disc (4) comprises clamping means by means of which the rod-shaped material can be held in the receiving troughs.

9. Separation device according to one of Claims 1 to 8, **characterized in that** the rod-shaped material to be separated can be fed to the separator disc (4) via a ramp (6) and the separated rod-shaped material can be delivered on a chute (7).

10. Separation device according to one of Claims 1 to 9, **characterized in that** the conveying means (2) take the form of a chain or cable.

## Revendications

1. Dispositif de séparation (1) pour matériau en forme de barre comprenant au moins un disque de séparation (4) avec un creux de réception (5) disposé du côté de la périphérie, ainsi que des moyens de transport (2) disposés essentiellement le long de l'axe de rotation du disque de séparation (4), avec des dispositifs d'entraînement (3), le matériau en forme de barre à séparer pouvant être acheminé au disque de séparation (4) et au moins deux creux de réception (5) étant prévus,
**caractérisé en ce que** les dispositifs d'entraînement (3) peuvent être écartés du disque de séparation (4) du côté tourné vers le matériau en forme de barre (8).

2. Dispositif de séparation selon la revendication 1, **caractérisé en ce que** les moyens de transport (2) sont orientés essentiellement obliquement par rapport à l'axe de rotation du disque de séparation (4), un angle d'inclinaison entre l'axe de rotation et les moyens de transport (2) étant choisi de telle sorte qu'après une rotation du disque de séparation (4), le matériau à séparer (8) soit orienté parallèlement à l'axe de rotation.

3. Dispositif de séparation selon la revendication 1 ou 2, **caractérisé en ce que** des moyens de synchronisation de la vitesse de rotation du disque de séparation (4) avec les moyens de transport (2) sont prévus.

4. Dispositif de séparation selon l'une quelconque des revendications 1 à 3, **caractérisé en ce que** les creux de réception (5) du disque de séparation (4) sont réglables de telle sorte qu'ils puissent être adaptés à la section transversale du matériau en forme de barre.

5. Dispositif de séparation selon l'une quelconque des revendications 1 à 4, **caractérisé en ce que** les creux de réception (5) du disque de séparation (4) peuvent être munis d'inserts (10).

6. Dispositif de séparation selon la revendication 5, **caractérisé en ce que** l'insert est une forme géométrique s'écartant de la forme du creux de réception.

7. Dispositif de séparation selon l'une quelconque des revendications 5 ou 6, **caractérisé en ce que** le matériau de l'insert est un plastique.

8. Dispositif de séparation selon l'une quelconque des revendications 1 à 7, **caractérisé en ce que** le disque de séparation (4) présente des moyens de serrage au moyen desquels le matériau en forme de barre peut être fixé dans les creux de réception.

9. Dispositif de séparation selon l'une quelconque des revendications 1 à 8, **caractérisé en ce que** le matériau en forme de barre à séparer est acheminé par le biais d'une rampe (6) au disque de séparation (4) et le matériau en forme de barre séparé peut être mis à disposition sur une glissière (7).

10. Dispositif de séparation selon l'une quelconque des revendications 1 à 9, **caractérisé en ce que** les moyens de transport (2) sont réalisés sous forme de chaîne ou de câble.
